(19) **Europäisches Patentamt**
**European Patent Office**
**Office européen des brevets**

(11) **EP 4 641 900 A1**

(12) **EUROPÄISCHE PATENTANMELDUNG**

(43) Veröffentlichungstag:
**29.10.2025 Patentblatt 2025/44**

(51) Internationale Patentklassifikation (IPC):
***H02M 1/12*** *(2006.01)*

(21) Anmeldenummer: **24171594.5**

(52) Gemeinsame Patentklassifikation (CPC):
**H02M 1/123**

(22) Anmeldetag: **22.04.2024**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Siemens Aktiengesellschaft**
**80333 München (DE)**

(72) Erfinder:
• **Hänsel, Stefan**
**91080 Spardorf (DE)**
• **Polster, Thomas**
**91284 Neuhaus (DE)**

(74) Vertreter: **Siemens Patent Attorneys**
**Postfach 22 16 34**
**80506 München (DE)**

(54) **AKTIVES GLEICHTAKT-EMV-FILTER**

(57) Aktives Störfilter in Feedforward-Topologie zur aktiven EMV-Filterung von Störsignalen, die von einer EMV-Quelle in einer elektronischen Schaltung in eine Übertragungsleitung eingekoppelt werden, umfassend
- eine Messvorrichtung zur Detektion der Störungen,
- einer Hochpassfiltereinheit,
- eine Stromeinprägeeinheit,
- eine Steuerungseinheit,
wobei
- die Stromeinprägeeinheit einen an die Übertragungsleitung angeschlossenen Koppelkondensator und eine Spannungsquelle umfasst,
- die Spannungsquelle eine Integratorschaltung umfasst,
- die Integratorschaltung einen Operationsverstärker und eine zwischen dessen Ausgang und seinem invertierenden Eingang geschaltete Rückkoppelschaltung umfasst,
- die Rückkoppelschaltung eine Parallelschaltung eines ersten und zweiten Zweigs umfasst, wobei der erste Zweig eine Serienschaltung eines Rückkoppel-Kondensators und einer Kompensations-Induktivität umfasst.

FIG 6

**Beschreibung**

Die vorliegende Erfindung betrifft eine Schaltungsanordnung in einer Feedforward-Struktur zur aktiven EMV-Filterung von Störsignalen, die von einer EMV-Quelle in eine elektrische Übertragungsleitung eingekoppelt werden, die mit der EMV-Quelle verbunden ist, wobei die Schaltungsanordnung eine Strommessvorrichtung, eine Hochpassfiltereinheit, eine Stromeinprägeeinheit und eine Steuerungseinheit umfasst.

Leistungssysteme, deren Halbleiterschaltelemente pulsweitenmoduliert betrieben werden, verursachen EMV-Störungen. Die elektromagnetische Verträglichkeit (EMV) bezeichnet die Fähigkeit eines technischen Geräts, andere Geräte nicht durch ungewollte elektrische oder elektromagnetische Effekte zu stören oder durch andere Geräte gestört zu werden. Zur Erfüllung vorgegebener Standards, z.B. der EN 61800-3 für industrielle Anwendungen, müssen in ein Leistungselektroniksystem in der Regel Filter integriert werden. Bei diesen wird zwischen passiven Filter und aktiven Filtern unterschieden.

Passive Filter benötigen ein großes Raumvolumen, sind schwer und können Resonanzen in Verbindung mit einer Netzimpedanz hervorrufen. Aktive EMV-Filter (= "AEF" - Active EMI Filter) weisen diese Nachteile nicht auf, sofern sie geeignet gesteuert sind.

Es sind eine Vielzahl von Strukturen für EMV-Filter bekannt, wobei diese in Filter mit einer sog. Feedforward-Struktur (kurz: FF-Struktur) und in Filter mit einer sog. Feedback-Struktur (kurz: FB-Struktur) unterteilt werden können. Generell werden die Störungen bei einer Feedback-Struktur dort erfasst, wo sie bereits vom aktiven Filter unterdrückt werden. Eine Herausforderung von Feedback-Strukturen ist es, Instabilitäten zu vermeiden. Bei einer Feedforward-Struktur werden die Störungen gemessen, wo sie noch vom aktiven Filter unbeeinflusst sind. Da es hier keine Feedback-Schleife gibt, die die Kompensation automatisch an die Höhe der Störungen anpasst, ist die Herausforderung typischerweise, die Störungen möglichst genau auszugleichen und dabei Fehler durch Modellierung und Nichtlinearitäten zu vermeiden.

Ein bekanntes aktives Filter in Feedforward-Struktur wird zur Kompensation von Gleichtaktstörungen (engl. common mode noise, CM) eingesetzt, da dafür vergleichsweise wenig Energie notwendig ist, während der Aufwand für die passive Dämpfung von Gleichtaktstörungen hoch ist und viel Bauraum benötigt wird. Dabei wird das aktive Filter als stromkompensierende Topologie aufgebaut, bei der eine Spannungsquelle oder aber auch Stromquelle zwischen einen Koppelkondensator, wofür beispielsweise der Y-Kondensator verwendet wird, und Erde eingebracht wird. Das Störungssignal wird dabei über eine Strommessung erzeugt (CSCI, current sense, current injection).

Ziel des aktiven Filters ist es, eine Spannung zu erzeugen, die der Spannung des Koppelkondensators für Frequenzen oberhalb der Nutzfrequenz (bspw. 50 Hz) genau invers ist und somit am Anschlusspunkts des Koppelkondensators eine Spannung von null ergibt. Der Strom im Y-Kondensator stellt also das Eingangssignal dar, das nach Umformung zum Kompensationssignal führt. Da sich der Koppelkondensator idealerweise wie ein Integrator verhält, kann dieses Verhalten durch einen Integrator nachgebildet werden und dadurch eine gute Performance des AEF erreicht werden. Es zeigt sich, dass die Genauigkeit eines wie beschrieben aufgebauten aktiven Filters bei Frequenzen ab etwa 100 kHz gegenüber dem idealen (theoretischen) Verhalten deutlich absinkt.

Es ist Aufgabe der Erfindung, ein aktives Störfilter in einer Feedforward-Topologie der eingangs beschriebenen Art zur aktiven EMV-Filterung von Störsignalen anzugeben, bei der die Dämpfung der Störsignale verbessert ist.

Diese Aufgabe wird durch eine Schaltungsanordnung mit den in Anspruch 1 angegebenen Merkmalen gelöst.

Das erfindungsgemäße aktive Störfilter ist ausgestaltet als Feedforward-Topologie zur aktiven EMV-Filterung von Störsignalen, die von einer EMV-Quelle in einer elektronischen Schaltung in eine Übertragungsleitung eingekoppelt werden. Das aktive Störfilter umfasst eine Messvorrichtung zur Detektion der Störungen, eine Hochpassfiltereinheit und eine Stromeinprägeeinheit.

Dabei weist die Stromeinprägeeinheit eine Spannungsquelle auf. Die Spannungsquelle umfasst eine Integratorschaltung und die Integratorschaltung wiederum umfasst einen Operationsverstärker und eine Rückkoppelschaltung. Die Rückkoppelschaltung ist zweckmäßig zwischen den Ausgang des Operationsverstärkers und seinem invertierenden Eingang geschaltet. Die Rückkoppelschaltung weist eine Parallelschaltung eines ersten und zweiten Zweigs auf, wobei der erste Zweig eine Serienschaltung eines Rückkoppel-Kondensators und einer Kompensations-Spule umfasst.

Zur Bewertung, wie gut die Performance des aktiven Filters ist, kann folgende Gleichung hergeleitet werden:

$$IL = \frac{i_{LISN}}{i_{AEF}} = \frac{Z_{AEF}}{Z_{grid}} =$$

$$= \frac{v_C - i_{CM,conv} \cdot G_{Int} \cdot G_{HP} \cdot G_{CT} \big/ i_{AEF}}{Z_{grid}} =$$

$$\approx \frac{v_C - v_C/Z_C \cdot G_{Int} \cdot G_{HP} \big/ I_{AEF}}{Z_{grid}} =$$

$$= \frac{Z_C}{Z_{grid}} \cdot \left(1 - \frac{G_{Int}}{Z_C} \cdot G_{HP} \cdot G_{CT}\right)$$

Dabei beschreibt die Einführdämpfung (englisch Intersection Loss IL) den Strom, der durch eine Netznachbildung fließt verglichen mit dem Strom, der durch das aktive Filter fließt. Je kleiner dieser Wert ist, desto besser ist das Filter. Für die Herleitung wird angenommen, dass der Hochpassfilter ($G_{HP}$) und der Stromsensor ($G_{CT}$) ideal sind und keinen Einfluss auf die Performance des aktiven Filters haben. Dann lässt sich feststellen, dass die Perfomance des Filters ausschließlich proportional zu 1 - $G_{Int}$ / Zc ist. Der Integrator ($G_{Int}$) muss also möglichst gut der Impedanz des Injektionskondensators entsprechen.

Für die Erfindung wurde erkannt, dass der Koppelkondensator, dessen Verhalten die Integratorschaltung nachbildet, beispielsweise ein y-Kondensator, und auch Teile des sonstigen Aufbaus eine parasitäre Induktivität aufweisen. Dadurch agiert der Koppelkondensator ab einer durch die parasitäre Induktivität mitbestimmten Eckfrequenz nicht mehr als idealer Integrator. Dadurch fällt die Genauigkeit des aktiven Filters ab der Eckfrequenz gegenüber der theoretischen Genauigkeit ab. Durch das Einbringen der Kompensations-Spule als Serienelement zum Rückkoppel-Kondensator in die Integratorschaltung wird das unideale Verhalten des Koppelkondensators vorteilhaft nachgebildet. Dadurch wird die Genauigkeit des aktiven Filters oberhalb von 100 kHz deutlich verbessert.

Vorteilhafte Ausgestaltungen des erfindungsgemäßen aktiven Störfilters gehen aus den abhängigen Ansprüchen hervor. Dabei kann die Ausführungsform der unabhängigen Ansprüche mit den Merkmalen eines der Unteransprüche oder vorzugsweise auch mit denen aus mehreren Unteransprüchen kombiniert werden. Demgemäß können noch zusätzlich folgende Merkmale vorgesehen werden:
Die Messvorrichtung zur Detektion der Störungen kann als Strommessvorrichtung für den Strom in der Übertragungsleitung ausgeführt sein. Beispielsweise kann der CM-Strom durch eine in einem Stromrichter vorhandene Filterspule für die Filterung von Gegentaktstörungen oder Gleichtaktstörungen gemessen werden. Die konkrete Ausführung der Strommessung kann auch eine Spannungsmessung beinhalten, beispielsweise eine Spannungsmessung über den Koppelkondensator. Die Messung kann mittels einer Rogoswkispule oder einem Stromtransformator durchgeführt werden oder mittels einer zusätzlichen Wicklung an einer vorhandenen Spule, beispielsweise einer CM- oder DM-Filterdrossel.

Die Hochpassfiltereinheit ist zweckmäßig zwischen die Strommess-Vorrichtung und die Integratorschaltung geschaltet. In Industrienetzen können Oberschwingungen bis hin zu mehreren Kilohertz mit signifikanten Amplituden bis zu mehreren Volt auftreten. Das aktive Filter muss in der Lage sein, die Störungen aus dem Netz von den Störungen, die von der zu filternden Störquelle kommen, zu trennen. Ansonsten arbeitet das aktive Filter gegen das Netz, wofür seine Leistung nicht ausreicht. Um eine entsprechend gute Trennung zu erreichen, werden zwei Methoden angewendet. Einerseits bringt die verwendete Topologie bereits von sich aus eine Trennung der Störungen mit sich, da ausschließlich der Strom gemessen wird, der zwischen Umrichter und y-Kondensator fließt.

Bevorzugt wird die im Integrator erzeugte Spannung mit einer dem Integrator nachgeschalteten Endstufe gepuffert, die einen ausreichend großen Strom bereitstellen kann. Die Endstufe kann als invertierende oder nichtinvertierende Schaltung mit einem Operationsverstärker oder aus diskreten Bauelementen bspw. als Push-Pull-Stufe aufgebaut werden.

In einer vorteilhaften Ausgestaltung weist die Kompensations-Induktivität eine Induktivität von nicht mehr als 150 nH auf. Hierdurch wird vorteilhaft Instabilität des Integrators vermieden. Diese Induktivität entspricht einer parasitären Induktivität von ca. 15 nH bei einem Eingangswiderstand $R_{Int}$ von 10 Ohm.

Zweckmäßig umfasst der zweite Zweig der Rückkoppelschaltung in der Integratorschaltung einen Rückkoppel-Widerstand oder eine Rückkoppel-Induktivität. Dadurch ist in beiden Fällen ein Hochpass gebildet.

Bei der Verwendung einer parallelen Rückkoppel-Induktivität ist ein Verlauf der Dämpfung mit - 40dB/dec möglich. Wird hingegen ein Rückkoppel-Widerstand verwendet, ergibt sich ein Verlauf der Dämpfung mit -20dB/dec.

Ein Rückkoppel-Widerstand begrenzt dabei die Amplitude des Integrators bei niedrigen Frequenzen. Sein Wert wird bevorzugt so gewählt, dass die untere Eckfrequenz $f_{Int} = 1 / (2\,\pi\,R_L\,C_{Int})$ mindestens um einen Faktor 10 niedriger als die der Hochpassfiltereinheit liegt. Dadurch kann sichergestellt werden, dass der Integrator bei niedrigen Frequenzen nicht das Verhalten des aktiven Filters dominiert und die Steigung der Einführdämpfung auf lediglich -20dB/Dekade senkt.

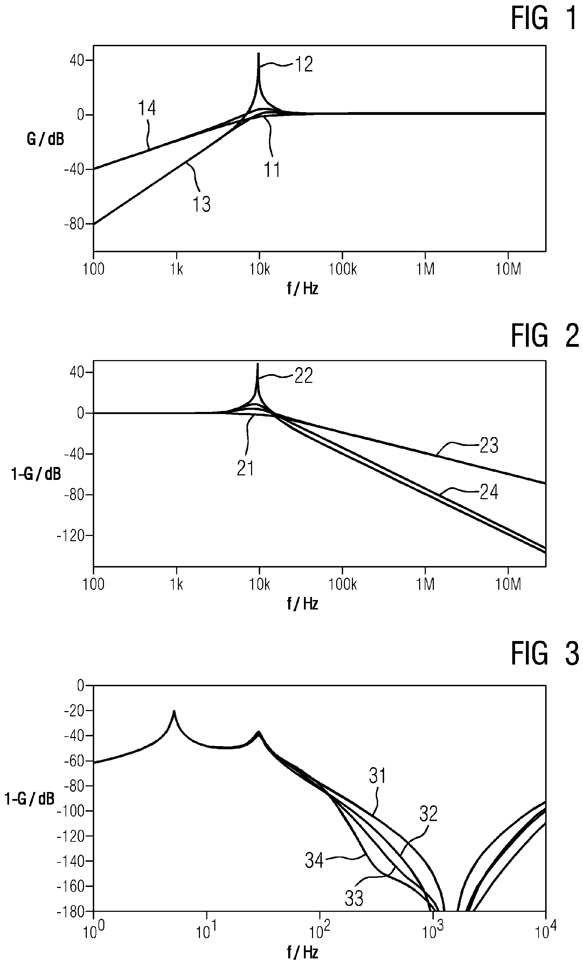

Bevorzugt ist die Hochpassfilter-Einheit ausgestaltet als gedämpftes zweipoliges Filter. Für einen Vergleich werden verschiedene Topologien betrachtet. Ein Hochpassfilter zweiter Ordnung kann als ungedämpfter Hochpass oder als gedämpfter Hochpassfilter aufgebaut werden. Der gedämpfte Hochpass kann dabei durch einen Widerstand $R_C/R_L$ beim Kondensator oder bei der Spule aufgebaut werden. Der Frequenzverlauf der einzelnen Filter ist in Figur 1 gezeigt. Ein Filter erster Ordnung (Verlauf 11) und der gedämpfte Filter zweiter Ordnung mit $R_C = 0$ (Verlauf 14) weisen dabei im Sperrband -20dB/dec auf, während der ungedämpfte Filter zweiter Ordnung (Verlauf 12) und der gedämpfte Filter zweiter Ordnung mit $R_L = 0$ (Verlauf 13) - 40dB/dec aufweisen.

Zur Bewertung der Trennschärfe zwischen Pass-Band und Stop-Band kann die oben eingeführte Formel für IL verwendet werden, bei der $G_{Int}/ Zc$, $G_{CT}$ und $G_{AMP}$ zu eins gesetzt werden.

Für ein aktives Filter in Feedforward-Topologie ist jedoch nicht ausschließlich die Übertragungsfunktion G des Hochpassfilters selbst, sondern auch die Übertragungsfunktion (1 - G) wichtig und sollte betrachtet werden. Die Übertragungsfunktion (1 - G) beschreibt bei sonst idealen Bauteilen die maximale Performance, die das aktive Filter aufgrund des Hochpassfilters erreichen kann. Figur 2 zeigt die Verläufe 41...44 der Übertragungsfunktionen (1 - G) der oben betrachteten Filter.

Es ist zu erkennen, dass ein gedämpftes zweipoliges Hochpassfilter mit einer Nullstelle bei 0 und einer Nullstelle bei der doppelten Polstelle (in dem gezeigten Fall bei 10 kHz) das beste Verhalten zeigt. In der Resonanzstelle gibt es eine leichte Überhöhung, anschließend fällt die Einführdämpfung mit 40dB/Dekade. Es ist aber auch zu erkennen, dass die Filterkennlinie maximal mit 40dB/Dekade abfallen kann, sodass eine möglichst niedrige Resonanzstelle gewählt werden muss, um eine möglichst gute Dämpfung von mindestens 40dB bei hohen Frequenzen zu erreichen.

Es ist zu erkennen, dass das Filter erster Ordnung (Verlauf 21) und das Filter zweiter Ordnung mit $R_L = 0$ (Verlauf 22) eine Steigung von lediglich -20dB/dec zeigen. Das ungedämpfte Filter zweiter Ordnung und das gedämpfte Filter zweiter Ordnung mit $R_C = 0$ zeigen eine Steigung von -40dB/dec (Verläufe 23, 24).

Bevorzugt ist daher die Hochpassfilter-Einheit als ein Filter zweiter Ordnung mit $R_C = 0$ ausgestaltet. Beispielsweise kann es in einer einfachen Ausgestaltung aus einem Filterkondensator sowie einer Serie aus Dämpfungswiderstand und Filterspule aufgebaut werden. Die Anschlüsse des Filterkondensators bilden dabei Eingangs- und Ausgangsanschluss des Filters. Der Ausgangsanschluss ist ferner mit der Serie aus Dämpfungswiderstand und Filterspule verbunden, deren zweiter Anschluss mit Ground oder einem Minuspol der Signalleitungen verbunden ist.

Bevorzugt umfasst dieser Filtertyp einen möglichst idealen Filterkondensator (möglichst geringer parasitärer Widerstand). Die Induktivität der Filterspule muss dabei einen hohen Wert annehmen, um eine Eckfrequenz im niedrigen Kilohertz-Bereich erreichen zu können. Solche Spulen sind recht groß und oft nicht für hohe Frequenzen geeignet.

Um dem zu begegnen, ist die Filterinduktivität in einer besonders vorteilhaften Ausgestaltung und Weiterbildung der Erfindung durch eine Gyratorschaltung gebildet. Hierfür wurde erkannt, dass eine Gyratorschaltung viel kleiner und leichter als eine Spule mit vergleichbarer Induktivität ist, während die Einschränkung der Gyratorschaltung, nur für kleine Signale geeignet zu sein, im aktiven Filter unerheblich ist.

Die vorgeschlagene Lösung benötigt lediglich einen Operationsverstärker sowie zwei Widerstände und einen Kondensator mit geringer Kapazität in SMD-Bauweise. Dies ist mit sehr geringem Bauraum verbunden und bietet somit einen wesentlichen Vorteil gegenüber einer vergleichbaren Spule.

Bevorzugt umfasst die Hochpassfilter-Einheit also einen Operationsverstärker, wobei dessen Ausgang mit seinem invertierenden Eingang gekoppelt ist und zwischen dem invertierenden und nicht-invertierenden Eingang eine Serienschaltung aus dem Dämpfungswiderstand und einem Gyratorkondensator geschaltet ist. Der Knotenpunkt zwischen dem Dämpfungswiderstand und dem Gyratorkondensator bildet dabei einen ersten Anschluss der Filter-Serienschaltung. Ein Gyratorwiderstand ist zwischen den nichtinvertierenden Eingang und einen zweiten Anschluss der Filter-Serienschaltung geschaltet ist.

Besonders vorteilhaft ist es, wenn zwei oder mehr Operationsverstärker, die Teil des aktiven Filters sind, in einem gemeinsamen Gehäuse integriert werden. Beispielsweise kann das aktive Filter einen Ausgangsverstärker mit einem weiteren Operationsverstärker aufweisen, der das Einkoppelsignal erzeugt. Beide Operationsverstärker sind in einem Gehäuse zusammengefasst. Abgesehen davon ist dann für die Gyratorschaltung nur noch im Wesentlichen zwei SMD-Widerstände und ein Kondensator notwendig, wofür nur sehr wenig Bauraum benötigt wird.

Ein weiterer Gegenstand der Erfindung ist also auch ein aktives Störfilter in Feedforward-Topologie zur aktiven EMV-Filterung von Störsignalen, die von einer EMV-Quelle in einer elektronischen Schaltung in eine Übertragungsleitung eingekoppelt werden, umfassend eine Messvorrichtung zur Detektion der Störungen, eine Hochpassfiltereinheit, eine Stromeinprägeeinheit und eine Steuerungseinheit. Dabei umfasst die Stromeinprägeeinheit eine Spannungsquelle, wobei die Hochpassfilter-Einheit ausgestaltet als gedämpftes zweipoliges Filter, insbesondere mit einer Filterinduktivität. Die Filterinduktivität ist bevorzugt durch eine Gyratorschaltung gebildet.

In einer alternativen Ausgestaltung der Erfindung umfasst die Hochpassfiltereinheit einen Filterkondensator, einen Filterwiderstand, einen Tiefpassfilter und eine Subtrahierschaltung.

Die Gyratorschaltung implementiert folgende Übertragungsfunktion:

$$G_{HP} = \frac{s_n^2 + s_n}{s_n^2 + d s_n + 1}$$

Dabei sind:

d der Dämpfungsfaktor
$s_n = s / \omega_{HP}$ der normierten komplexen Frequenz mit $\omega_{HP}$ = 100 kHz
$s = j\omega$ die komplexe Frequenz

Um einen im Vergleich dazu noch steileren Verlauf der Übertragungsfunktion oberhalb von $\omega_{HP}$ zu erreichen, können Filter höherer Ordnung verwendet werden. Dazu wird vorteilhaft mittels des Tiefpassfilters und der Subtrahiereinheit ein Filter vierter Ordnung implementiert. Dieses Filter hat folgende Transferfunktion:

$$G_{HP} = \frac{(s_n^2 + d s_n + 1)^2 - 1}{(s_n^2 + d s_n + 1)^2}$$

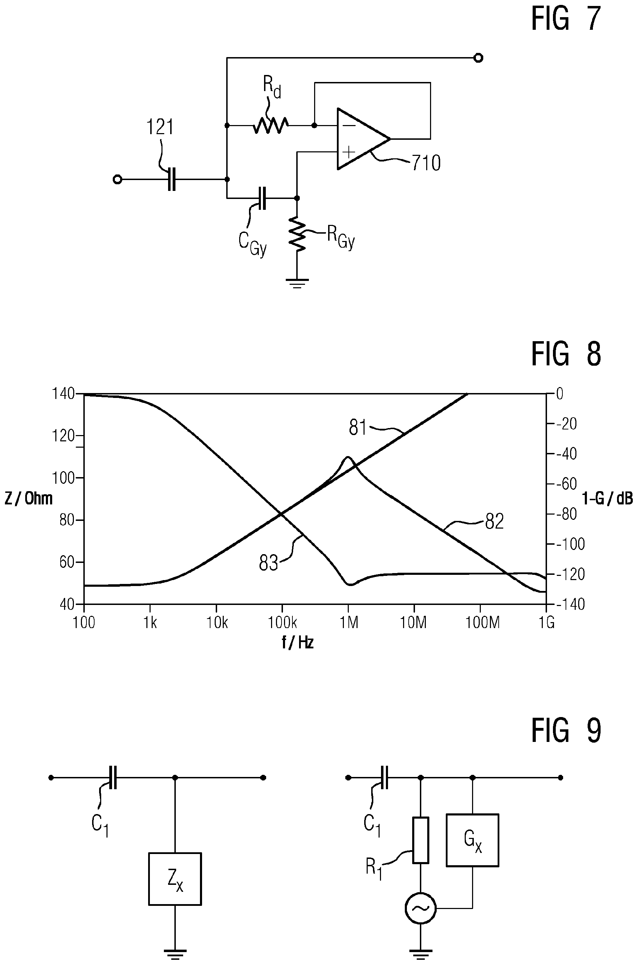

Diese Transferfunktion lässt sich nicht mehr mit einer bekannten Operationsverstärkerschaltung realisieren. Für die Umsetzung wird zweckmäßig der Filterkondensator im Signalweg vorgesehen, da damit hohe Spannungen blockiert werden können. Zur Darstellung einer Impedanz $Z_x$, die mit dem Kondensator die geforderte Übertragungsfunktion ergibt, wird von einem Aufbau ausgegangen, der schematisch in Figur 9 dargestellt ist.

Dabei wird die Impedanz $Z_x$ durch einen Dämpfungswiderstand $R_1$ in Serie zu einer Hochpass-Spannungsquelle in Verbindung mit einer mit der Hochpass-Spannungsquelle verbundenen Ansteuerschaltung dargestellt. Die Hochpass-Spannungsquelle erzeugt aus der Eingangsspannung $v_{in}$, die der Gesamtspannung über den Dämpfungswiderstand und der Hochpass-Spannungsquelle entspricht, eine Ausgangsspannung $v_{out}$. Die Übertragungsfunktion der Ansteuerschaltung ist mit $G_x$ bezeichnet.

Die Hochpass-Spannungsquelle soll eine Spannung $v_{out} = G_x \cdot v_{in}$ erzeugen.

$$Z_x = \frac{v_{in}}{(v_{in} - v_{out})/R_1} = \frac{v_{in}}{(v_{in} - G_x \cdot v_{in})/R_1} = \frac{R_1}{(1 - G_x)}$$

Gesucht ist jetzt die Übertragungsfunktion $G_x$:

$$G_{Hp} = \frac{Z_x}{Z_x + \frac{1}{sC_1}} = \frac{sC_1 Z_x}{sC_1 Z_x + 1} = \frac{\sum_{i=1}^n c_i \cdot (s_n)^i}{1 + \sum_{i=1}^n c_i \cdot (s_n)^i}$$

$$Z_x = \frac{1}{sC_1} \sum_{i=1}^n c_i \cdot (s_n)^i$$

Daraus ergibt sich

$$G_x = 1 - \frac{R_1}{Z_x} = 1 - sR_1 C_1 \frac{1}{\sum_{i=1}^n c_i \cdot (s_n)^i}$$

Wobei die Resonanzfrequenz $\omega_n = \frac{1}{R_1 C_1}$ und somit $s_n = sR_1 C_1$ gewählt werden kann und sich somit

$$Z_x = R_1 \sum_{i=1}^{n} c_i \cdot (s_n)^{i-1}$$

$$G_x = 1 - \frac{R_1}{Z_x} = 1 - \frac{1}{\sum_{i=1}^{n} c_i \cdot (s_n)^{i-1}}$$

Diese Funktion kann über einen Subtrahierer und einen Tiefpassfilter n-ter Ordnung dargestellt werden.

$$G_{TP} = \frac{1}{\sum_{i=1}^{n} c_i \cdot (s_n)^{i-1}}$$

Vorteilhaft wird also durch diese Ausgestaltung eine Hochpassfilter-Einheit geschaffen, die als Filter 4. Ordnung agiert und somit für eine sehr hohe Steigung der Dämpfung sorgt. Bei einer Ausgestaltung der Hochpassfilter-Einheit mit einer Eckfrequenz von 100 kHz wird im Bereich zwischen 100 kHz und 1 MHz eine Steigung von -80 dB/dec erreicht, also ein sehr viel schnellerer Übergang vom nichtaktivem zum aktiven Frequenzbereich des aktiven Filters. Der Verlauf der Dämpfung ist exemplarisch in Figur 3 dargestellt. Die Verläufe 31, 32 und 33 zeigen das Verhalten ohne aktives Filter, mit einem einpoligen Hochpassfilter und einem zweipoligen Hochpassfilter. Verlauf 34 zeigt das verbesserte Verhalten mit einem vierpoligen Filter.

Dabei kann die Subtrahierschaltung einen Operationsverstärker umfassen, wobei der Ausgang des Operationsverstärkers mit dem Filterwiderstand verbunden ist, der Tiefpassfilter zwischen einen ersten Eingang des Operationsverstärkers und den Filterkondensator geschaltet ist und der zweite Eingang des Operationsverstärkers mit dem Filterkondensator verbunden ist.

Das Tiefpassfilter kann beispielsweise zwei Sallen-Key-Filter umfassen. Um die Eingangsimpedanz des so geschaffenen Filters zu erhöhen, kann dem Tiefpassfilter vorteilhaft ein Impedanzwandler vorgeschaltet sein. Der Impedanzwandler ist dafür zwischen dem Filterkondensator und den daran angeschlossenen Knotenpunkten des Tiefpassfilters und der Subtrahierschaltung angeordnet.

Ein weiterer Gegenstand der Erfindung ist also auch ein aktives Störfilter in Feedforward-Topologie zur aktiven EMV-Filterung von Störsignalen, die von einer EMV-Quelle in einer elektronischen Schaltung in eine Übertragungsleitung eingekoppelt werden, umfassend eine Messvorrichtung zur Detektion der Störungen, eine Hochpassfiltereinheit, eine Stromeinprägeeinheit und eine Steuerungseinheit. Dabei umfasst die Stromeinprägeeinheit eine Spannungsquelle, wobei die Hochpassfilter-Einheit einen Filterkondensator, einen Filterwiderstand, einen Tiefpassfilter und eine Subtrahierschaltung umfasst, wobei die Subtrahierschaltung insbesondere einen Operationsverstärker umfasst, wobei der Ausgang des Operationsverstärkers mit dem Filterwiderstand verbunden ist, der Tiefpassfilter zwischen einen ersten Eingang des Operationsverstärkers und den Filterkondensator geschaltet ist und der zweite Eingang des Operationsverstärkers mit dem Filterkondensator verbunden ist.

Bevorzugt umfasst das Störfilter eine der Integratorschaltung nachgeordnete Verstärkerschaltung mit einem Operationsverstärker und einem mit einem der Eingänge des Operationsverstärkers verbundenen dritten Widerstand, wobei dem dritten Widerstand ein dritter Kondensator parallelgeschaltet ist.

Zur Kompensation der Störungen werden, je nachdem wo der aktive Filter eingesetzt wird, mehrere Milliampere bis zu wenigen Ampere benötigt. Operationsverstärker, die diese Ströme treiben können, haben nur eine begrenzte Bandbreite. Diese regelt die Ausgangsamplitude auf die Eingangsspannung. Die Übertragungsfunktion der Standardschaltungen ist bis zur Eckfrequenz nahezu konstant.

Es wurde aber erkannt, dass die Phase aufgrund der Eigenschaften des Operationsverstärkers schon bei wesentlich geringeren Frequenzen abfällt. Bei üblichen Schaltungen stellt dies kein Problem dar, da ausschließlich die Amplitude der Schaltung optimiert wird. Im Fall der Feedforward-Topologien bedeutet eine Drehung der Phase jedoch, dass das Kompensationssignal in der Phase vom Störsignal abweicht und somit die Störung nur mangelhaft kompensiert wird.

Durch den zugefügten dritten Kondensator parallel zum dritten Widerstand wird vorteilhaft die Phase des Ausgangs bei höheren Frequenzen angehoben. Dadurch kann dem Abfallen der Phase des Operationsverstärkers bis zu einer bestimmten Frequenz entgegengewirkt werden.

Zweckmäßig ist der dritte Kondensator derart gewählt, dass die Eckfrequenz $f = 1/(2\pi RC)$ eines Eingangsfilters bestehend aus drittem Widerstand und drittem Kondensator im Wesentlichen der Eckfrequenz des Operationsverstärkers entspricht.

Ein weiterer Gegenstand der Erfindung ist also auch ein aktives Störfilter in Feedforward-Topologie zur aktiven EMV-Filterung von Störsignalen, die von einer EMV-Quelle in einer elektronischen Schaltung in eine Übertragungsleitung eingekoppelt werden, umfassend eine Messvorrichtung zur Detektion der Störungen, eine Hochpassfiltereinheit, eine Stromeinprägeeinheit und eine Steuerungseinheit. Dabei umfasst die Stromeinprägeeinheit eine Spannungsquelle. Das Störfilter umfasst eine der Integratorschaltung nachgeordnete Verstärkerschaltung mit einem Operationsverstärker und einem mit einem der Eingänge des Operationsverstärkers verbundenen dritten Widerstand, wobei dem dritten Widerstand ein dritter Kondensator parallelgeschaltet ist.

Vorteilhafte Anwendungen des aktiven Filters bestehen beispielsweise in Stromversorgungen. In der industriellen Automatisierungstechnik (z.B. bei der diskreten Fertigungstechnik oder der Prozesstechnik) oder in der Gebäudeautomatisierung werden in großem Umfang elektronische Stromversorgungen für eine Versorgung von elektrischen Lasten, wie z.B. Steuerungen, Sensoren, Pumpen, Ventile, etc., mit elektrischer Energie aus einem Versorgungsnetz eingesetzt.

Die Lasten werden von der Stromversorgung mit einer geeigneten, oft vordefinierten Spannung versorgt. Typischerweise wird dazu ein eingangsseitig hohes Spannungsniveau eines einphasigen oder dreiphasigen Versorgungsnetzes, wie z.B. eine 230V-Wechselspannung, auf ein für die Last vordefiniertes, niedrigeres und üblicherweise konstantes Spannungsniveau (z.B. 24 V oder 48 V Gleichspannung als Nennausgangsspannung) auf einer Ausgangsseite der Stromversorgung umgesetzt.

Derartige Stromversorgungen sind dabei üblicherweise als getaktete Stromversorgungen bzw. Schaltnetzteile (manchmal auch als Schaltnetzgeräte bezeichnet) ausgebildet. Sie weisen üblicherweise ein Gehäuse auf und können auf eine Hutschiene montiert werden.

Eine solche getaktete Stromversorgung bzw. ein solches Schaltnetzteil umfasst in der Regel eine Eingangsstufe, beispielsweise in Form einer Gleichrichtereinheit, einen Zwischenkreis und einen Schaltwandler, durch welche die Wechselspannung aus dem Versorgungsnetz in eine Gleichspannung für die Energieversorgung der Last umgewandelt wird. Von der Stromversorgung wird die meist unstabilisierte Eingangsspannung dann in eine konstante Ausgangsspannung für die elektrische Last umgesetzt, wobei eine Konstanz der Ausgangsspannung und/oder eines Ausgangsstroms durch eine Regelung des Energieflusses erreicht wird.

Die Stromversorgung verfügt dabei typischerweise über ein passives Filter. Das passive Filter ist zwischen der Eingangsstufe und den Anschlüssen zum Versorgungsnetz angeordnet. Es umfasst einen oder mehrere Verbindungszweige von den Polen der Eingangsspannung über jeweils einen Kondensator zu Erde (Ground). Das vorbeschriebene aktive Filter ist Teil der Stromversorgung. Der Anschluss des aktiven Filters erfolgt bevorzugt an einem erdseitigen Anschluss der Kondensatoren des passiven Filters. Diese Kondensatoren bilden somit den Koppelkondensator.

Ein anderer Typ von Stromversorgung kommt beispielsweise für die Ansteuerung von Motoren in industriellen Umgebungen zu Einsatz. Die dafür verwendeten Umrichter umfassen typischerweise ebenfalls eine Eingangsstufe in Form einer Gleichrichtereinheit, einen Gleichspannungs-Zwischenkreis und einen Schaltwandler zur Erzeugung der Ausgangsspannung. Sowohl Eingangs- als auch Ausgangsspannung sind dabei typischerweise dreiphasige Spannungen. Der Umrichter verfügt dabei zweckmäßig über ein passives Filter, das beispielsweise als LCL-Filter aufgebaut ist. Das LCL-Filter umfasst zweckmäßig einen y-Kondensator. Der Anschluss des aktiven Filters erfolgt dabei bevorzugt an einem Anschluss des y-Kondensators. Der y-Kondensator bildet in diesem Fall den Koppelkondensator.

Im Folgenden wird die Erfindung anhand der in den Figuren dargestellten Ausführungsbeispiele näher beschrieben und erläutert. Es zeige, inklusive der bereits im Text angesprochenen Figuren:

Figur 1 Übertragungsfunktionen G verschiedener Hochpassfilter,

Figur 2 Übertragungsfunktionen 1 - G der Hochpassfilter,

Figur 3 Übertragungsfunktion 1 - G von Hochpassfiltern im Vergleich zum Hochpassfilter vierter Ordnung,

Figur 4 den Aufbau eines aktiven Filters mit einer Hochpassfilter-Einheit und einer Ausgangsverstärkerschaltung,

Figur 5 den Aufbau eines AC/AC-Umrichters mit einem aktiven Filter,

Figur 6 eine einphasige AC/DC-Stromversorgung mit dem aktiven Filter,

Figur 7 eine Hochpassfilter-Einheit mit einer Gyratorschaltung,

Figur 8 Verläufe der Impedanz von Induktivitäten sowie einer Übertragungsfunktion,

Figur 9 einen schematischen Aufbau eines Hochpassfilters vierter Ordnung,

Figur 10 eine Hochpassfilter-Einheit vierter Ordnung,

Figur 11 eine Ausgangsverstärkerschaltung.

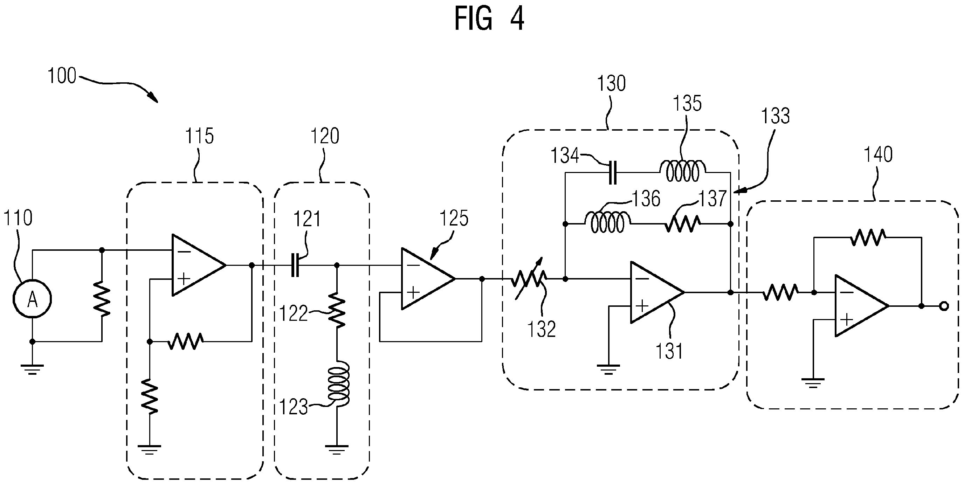

Figur 4 zeigt den Aufbau eines aktiven Filters 100 gemäß einem Ausführungsbeispiel für die Erfindung. Das aktive Filter 100 umfasst mehrere zueinander elektrisch in Serie geschaltete Einheiten.

Eine erste Einheit in eine Strommessvorrichtung 110 zur Ermittlung des Stroms in einer angeschlossenen elektrischen Schaltung.

Der Strommessvorrichtung 110 nachgeschaltet ist Hochpassfiltereinheit 120. Die Hochpassfiltereinheit 120 ist in Figur 4 als ein serieller Kondensator 121 und eine Serie eines Widerstands 122 und einer Spule 123 zu Erde dargestellt, kann aber in anderen Ausführungsformen des aktiven Filters 100 auch anders aufgebaut sein.

Zwischen die Strommessvorrichtung 110 und die Hochpassfiltereinheit 120 ist eine Verstärkerschaltung 115 geschaltet. Sie dient zur elektrischen Entkopplung der Strommessvorrichtung 110 und der Hochpassfiltereinheit 120. Sie umfasst einen Operationsverstärker 116 und zwei Widerstände 117, 118.

Der Hochpassfiltereinheit 120 nachgeschaltet ist eine Integratorschaltung 130. Zwischen der Hochpassfiltereinheit 120 und der Integratorschaltung 130 ist ein Spannungsfolger 125, der wiederum zur Entkopplung der beiden umliegenden Einheiten dient.

Die Integratorschaltung 130 basiert auf einem Operationsverstärker 131. Dessen invertierender Eingang ist über einen Eingangswiderstand 132 mit dem Spannungsfolger 125 gekoppelt, während der nichtinvertierende Eingang zu Erde geschaltet ist. Die Integratorschaltung 130 umfasst weiterhin eine zwischen den Ausgang des Operationsverstärkers 131 und seinem invertierenden Eingang geschaltete Rückkoppelschaltung 133. Die Rückkoppelschaltung weist eine Parallelschaltung eines ersten und zweiten Zweigs auf, wobei der erste Zweig eine Serienschaltung eines Rückkoppel-Kondensators 134 und einer Kompensations-Spule 135 umfasst. Der zweite Zweig umfasst eine Serienschaltung einer Rückkoppel-Spule 136 und eines Rückkoppel-Widerstands 137 auf. Die Rückkoppel-Spule 136 kann in anderen Ausführungsformen nicht vorhanden sein.

Durch das Einbringen der Kompensations-Spule 135 als Serienelement zum Rückkoppel-Kondensator 134 in die Integratorschaltung 130 wird das unideale Verhalten des Koppelkondensators vorteilhaft nachgebildet. Dadurch wird die Genauigkeit des aktiven Filters oberhalb von 100 kHz deutlich verbessert.

Der Integratorschaltung 130 nachgeschaltet ist ein Einkoppelverstärker 140. Der Einkoppelverstärker 140 umfasst einen Operationsverstärker 141, dessen invertierender Eingang über einen Eingangswiderstand 142 mit der Integratorschaltung 130 gekoppelt ist. Ein Rückkoppel-Widerstand 143 ist zwischen den invertierenden Eingang des Operationsverstärkers 141 und seinen Ausgang geschaltet. Sein nicht-invertierender Eingang ist zu Erde verbunden. Der Ausgang des Operationsverstärkers 141 bildet den Ausgang des aktiven Filters 100.

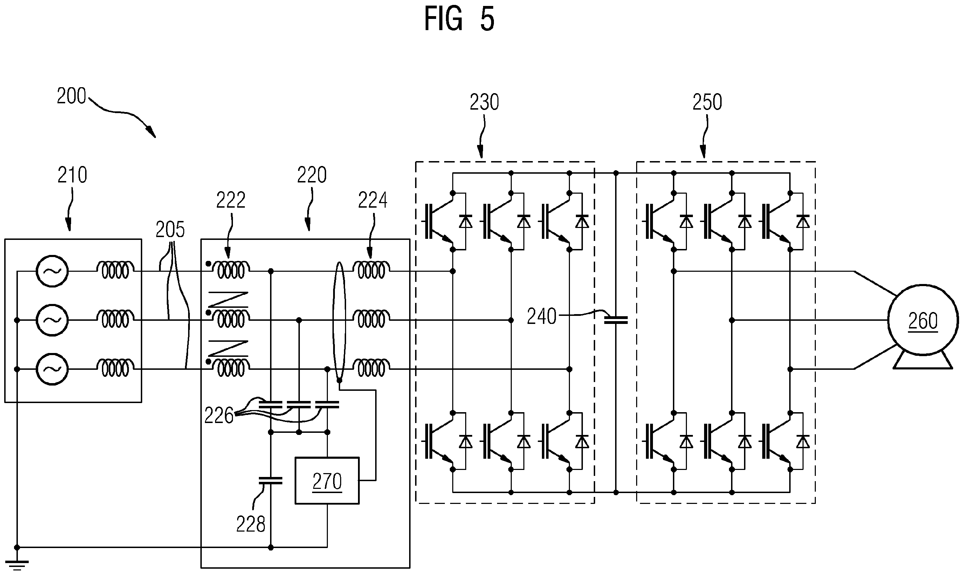

Figur 5 zeigt den Aufbau eines AC/AC-Umrichters 200 mit einem aktiven Filter 270 gemäß einem Ausführungsbeispiel für die Erfindung. Der AC/AC-Umrichter 200 ist an ein dreiphasiges Versorgungsnetz 210 angeschlossen. Auf den Anschluss an das Versorgungsnetz 210 folgend umfasst der AC/AC-Umrichter 200 ein passives Filter 220. Das passive Filter 220 umfasst eine LCL-Schaltung mit seriell in die Übertragungsleitungen 205 geschalteten gekoppelten Filterspulen 222 zur Filterung von Gleichtakt-Störungen und seriell in die Übertragungsleitungen 205 geschalteten gekoppelten Filterspulen 224 zur Filterung von Gegentakt-Störungen. An einem Knotenpunkt in den Übertragungsleitungen 205 zwischen den Filterspulen 222, 224 ist jeweils ein Filter-Kondensator 223 angeschlossen. Die zweiten Anschlüsse der Kondensatoren 226 sind miteinander verbunden und über einen weiteren Filter-Kondensator 228 mit Erde verbunden.

Die Übertragungsleitungen 205 sind weiterhin verbunden mit einem Gleichrichter 230. In dem vorliegenden Ausführungsbeispiel umfasst der Gleichrichter 230 drei mit ihren Außenanschlüssen parallel geschaltete Halbbrücken mit jeweils zwei seriellen Leistungshalbleiter-Schaltern. Die Übertragungsleitungen 205 sind mit den Mittelanschlüssen der Halbbrücken verbunden.

Die Außenanschlüsse der Halbbrücken bilden mit einem Zwischenkreis-Kondensator 240 einen Gleichspannungs-Zwischenkreis. An diesen ist weiterhin eine Wechselrichter-Schaltung 250 angeschlossen, die in diesem Beispiel analog zum Gleichrichter 230 aufgebaut ist. Die Ausgangsanschlüsse der Wechselrichterschaltung sind mit einer Last, in diesem Beispiel einem Elektromotor 260 verbunden.

Der AC/AC-Umrichter 200 umfasst weiterhin eine in Figur 5 nicht gezeigte Steuerung für die Leistungshalbleiter-Schalter von Gleichrichter 230 und Wechselrichter-Schaltung 250.

Das aktive Filter 270 ist im Bereich des passiven Filters 220 an den AC/AC-Umrichter 200 angeschlossen. Die Strommessvorrichtung 110 ist in die Übertragungsleitungen 205 eingebracht und misst so den Summenstrom in den Übertragungsleitungen in einem Bereich zwischen den Spulen 224 und dem Anschlusspunkt für die Kondensatoren 226. In andern Ausführungsformen kann die Messung auch zwischen den Spulen 224 und dem Gleichrichter erfolgen. Der Ausgang des Einkoppelverstärkers 140 ist zwischen den Kondensator 228 und Erde angeschlossen.

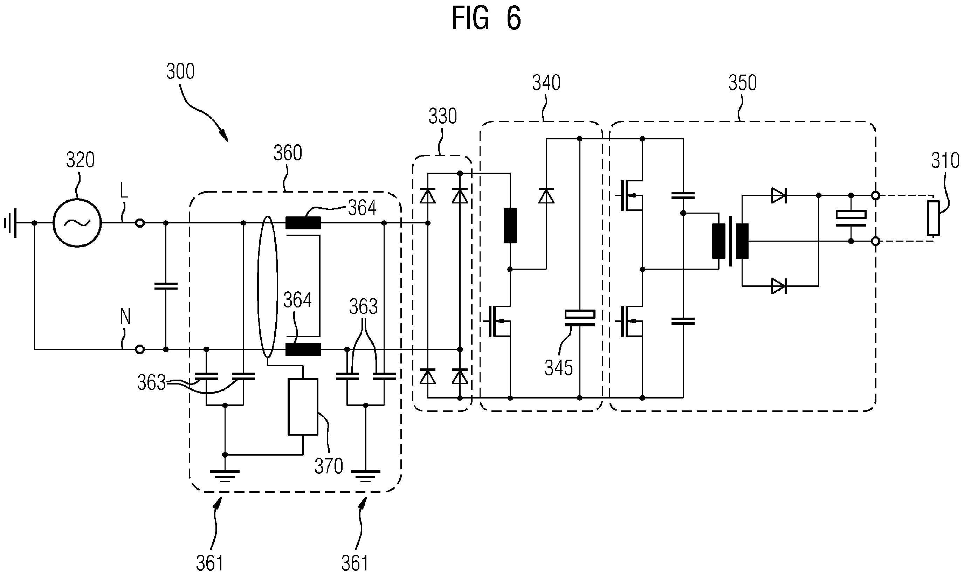

Figur 6 zeigt den Aufbau einer einphasigen AC/DC-Stromversorgung 300 mit einem aktiven Filter 370 gemäß einem Ausführungsbeispiel für die Erfindung. Die Stromversorgung 300 ist als getaktete Stromversorgung bzw. als Schaltnetzteil (Schaltnetzgerät) ausgebildet. Sie kann beispielsweise ausgebildet sein, auf einer Hutschiene befestigt zu werden, um einen einfachen Einbau in Schaltschränke zu ermöglichen.

In der Regel umfasst eine getaktete Stromversorgung einen Leistungsteil und eine Steuer- und/oder Regeleinheit (Im Folgenden als "Controller" bezeichnet) zur Ansteuerung des Leistungsteils. Der Leistungsteil besteht im Wesentlichen aus einem Wandler, wobei unterschiedliche Ausprägungen wie zum Beispiel Sperrwandler, Flusswandler, Gegentaktwandler, Aufwärtswandler, Abwärtswandler etc. bekannt sind. Abhängig von der eingangsseitig und ausgangsseitig auftretenden Stromform unterscheidet man des Weiteren zum Beispiel Gleichstrom-Gleichstrom-Wandler (DC-DC-Wandler), Wechselstrom-Gleichstrom-Wandler (AC-DC-Wandler) oder Gleichstrom-Wechselstrom-Wandler (DC-AC-Wandler).

Im Ausführungsbeispiel gemäß Figur 6 wird davon ausgegangen, dass eine Gleichspannungslast 310 aus einem Versorgungsnetz 320 in Form eines Wechselspannungsnetzes versorgt werden soll. Die Stromversorgung 300 wird deshalb eingangsseitig einphasig aus dem Versorgungsnetz 320 mit einer Eingangsspannung versorgt, die beispielsweise von einer Spannungsdifferenz zwischen einem Außenleiter L und dem Neutralleiter N des Versorgungsnetzes 320 gebildet wird. Prinzipiell ist jedoch auch eine dreiphasige Versorgung aus einem dreiphasigen Versorgungsnetz 210 möglich. Die Stromversorgung 300 umfasst eine Gleichrichtereinheit 330, einen Zwischenkreis 340 und einen Schaltwandler 350.

Die Eingangsspannung, die beispielsweise eine 230V-Wechselspannung sein kann, wird über die Gleichrichtereinheit 330 als Eingangsstufe in eine gleichgerichtete Zwischenkreisspannung an einer Ausgangsseite der Gleichrichtereinheit 330, also an einer Eingangsseite des Zwischenkreises 340 umgesetzt. Der Zwischenkreis 340 kann beispielsweise einen Zwischenkreiskondensator 345 umfassen. Im Zwischenkreis 340 können noch weitere Komponenten angeschlossen sein, beispielsweise weitere Kondensatoren zur Verbesserung der EMV-Eigenschaften.

Der Schaltwandler 350 ist an einer Ausgangsseite des Zwischenkreises 340 angeordnet und weist zumindest ein periodisch arbeitendes, elektronisches Schaltelement auf. Er kann z.B. als potentialtrennender Schaltwandler, welcher eine galvanische Trennung (z.B. Transformator) aufweist, oder als ein potentialgebundener (d.h. nicht potentialtrennender) Schaltwandler 350 ohne galvanische Trennung ausgeführt sein. Beispielsweise kann der Schaltwandler 350 als DC/DC-Wandler nach dem LLC-Prinzip ausgeführt sein.

Durch eine Regelung des Energieflusses durch die Stromversorgung 300 mit Hilfe eines Controllers wird die meist unstabilisierte Eingangsspannung in eine geregelte Ausgangsspannung, beispielsweise eine Gleichspannung von 28 V oder 48 V zur Versorgung der Last 310 umgewandelt.

Eingangsseitig kann zwischen der Gleichrichtereinheit 330 und dem Anschluss zum Versorgungsnetz 320 ein passives Filter 360 vorhanden sein. Das passive Filter 360 umfasst in diesem Beispiel zwei Zweige 361, 362. Jeder der Zweige 361, 362 umfasst zwei Kondensatoren 363, von denen je einer an den Außenleiter L und den Neutralleiter N angeschlossen ist. Der jeweilige zweite Anschuss der Kondensatoren 363 ist mit Erde verbunden. Zwischen die beiden Zweige 361, 362 sind im Außenleiter und Neutralleiter L, N zwei gekoppelte Spulen 364 geschaltet.

Das aktive Filter 370 kann in diesem Beispiel so angeschlossen werden, dass es die CM-Spannung über die Kondensatoren in beiden Zweigen 361, 362 nachbildet. Dafür ist die Strommessvorrichtung 110 im Bereich des Anschlussesso eingebracht, dass es den Summenstrom des Leiters L und N misst. Der Ausgang des Einkoppelverstärkers 140 ist wiederum an Erde angeschlossen.

Figur 7 zeigt eine beispielhafte Ausführungsform für eine Hochpassfilter-Einheit 700 für das aktive Filter 100, 270, 370. Diese Ausführungsform umfasst eine Teilschaltung, die dem Typ nach einer Gyratorschaltung entspricht. Sie umfasst einen Operationsverstärker 710, einen Dämpfungswiderstand $R_D$, einen Hilfskondensator $C_{Gy}$ und einen Hilfswiderstand $R_{Gy}$. Diese Teilschaltung ersetzt die Serie aus Spule 122 und Dämpfungs-Widerstand 123. Ebenfalls Teil der Hochpassfilter-Einheit 120 ist weiterhin der Hochpassfilter-Kondensator 121. Als Induktivität der Teilschaltung ergibt sich $L_{Gy} = R_D R_{Gy} C_{Gy}$. Es kann damit durch die Wahl der Elemente, bei der $R_D << R_{Gy}$ eingehalten werden muss, eine hohe Induktivität dargestellt werden, wobei die Baugröße im Gegensatz zu einer entsprechenden Spule minimal ist, da es sich bei den verwendeten Elementen beispielsweise um kleine SMD-Bauteile handeln kann.

Figur 8 zeigt einen Vergleich der Impedanzen einer idealen Spule (Verlauf 81) mit der Impedanz der Gyratorschaltung (Verlauf 82). Es ist zu erkennen, dass bis zu einer Frequenz von etwa 1 MHz die Impedanz der Gyratorschaltung der Impedanz einer idealen Spule mit einem Innenwiderstand folgt. Erst danach, wenn die Verstärkung des Operationsverstärkers 710 abnimmt, fällt die Impedanz wieder ab. Die Auswirkung dieser Nichtidealität auf die Übertragungsfunktion zeigt der Verlauf 83 in Figur 8. Es ist zu erkennen, dass der Verlauf 83 eine Steigung von -40 db/dec zeigt, bis bei einer Frequenz von etwa 1 MHz ein Wert von -120 dB erreicht wird. Auf diesem Wert verbleibt der Verlauf 83. Für den realen aktiven Filter ist das keine nennenswerte Limitierung, da dominantere Effekte das Verhalten bessere Werte als -60 dB verhindern.

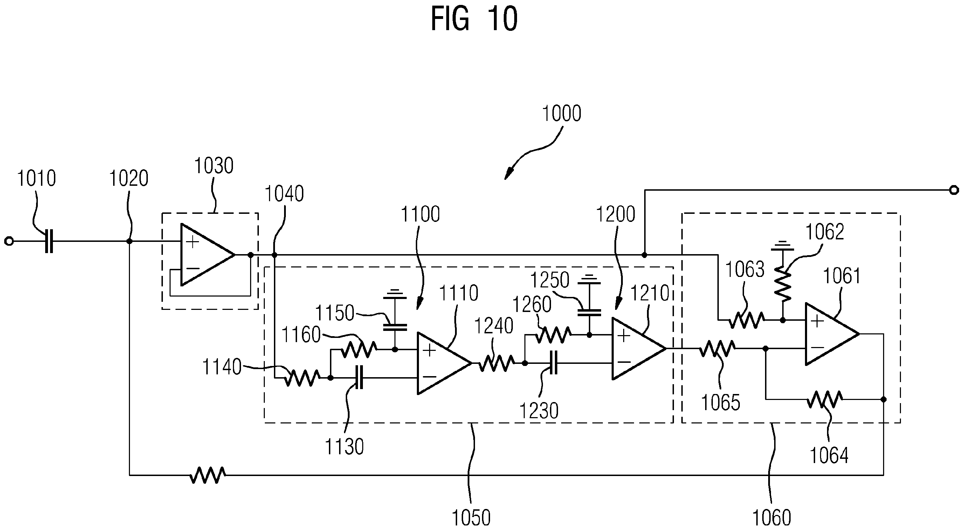

Figur 10 zeigt eine weitere beispielhafte Ausführungsform für eine Hochpassfilter-Einheit 1000 für das aktive Filter 100, 270, 370. Diese Ausführungsform realisiert ein Filter vierter Ordnung.

Die Eckfrequenz wurde in diesem Ausführungsbeispiel zu 100 kHz gewählt und die Butterworth-Filterkoeffizienten verwendet.

Die Hochpassfilter-Einheit 1000 umfasst einen Filterkondensator 1010 als Eingangselement. Dessen zweiter Anschluss bildet einen ersten Knotenpunkt 1020 der Hochpassfilter-Einheit 1000. An den ersten Knotenpunkt 1020 angeschlossen ist ein Spannungsfolger 1030 als Impedanzwandler, dessen Ausgang einen zweiten Knotenpunkt 1040 bildet. Der zweite Knotenpunkt 1040 bildet auch den Ausgang der Hochpassfilter-Einheit 1000. Der Spannungsfolger 1030 wird hier verwendet, da die Eingangsimpedanz des aktiven Filters mit 12,1 kOhm gering ist. Ein weiterer Vorteil des Spannungsfolgers besteht darin, dass damit ein niederimpedanter Ausgang der Filterstruktur zur Verfügung steht.

Mit dem zweiten Knotenpunkt 1040 verbunden ist eine Tiefpass-Schaltung 1050. Die Tiefpass-Schaltung 1050 umfasst zwei seriell geschalteten Sallen-Key-Filterstrukturen 1100, 1200. Diese sind analog aufgebaut, wobei jeweils ein Operationsverstärker 1110, 1210 vorhanden ist. Dessen invertierender Eingang ist jeweils über einen Kondensator 1130, 1230 mit einem Eingangswiderstand 1140, 1240 verbunden. Der nicht-invertierende Eingang ist jeweils über einen Kondensator 1150, 1250 zu Erde verbunden und über einen Widerstand 1160, 1260 ebenfalls mit dem Eingangswiderstand verbunden. Der Ausgang der Tiefpass-Schaltung 1050 entspricht dem Ausgang der zweiten Sallen-Key-Filterstruktur 1200.

Weiterhin umfasst die Hochpassfilter-Einheit 1000 eine Subtrahierschaltung 1060. Die Subtrahierschaltung 1060 umfasst einen Operationsverstärker 1061. Der nicht-invertierende Eingang des Operationsverstärkers 1061 ist über einen Widerstand 1062 mit Erde verbunden und über einen weiteren Widerstand 1063 mit dem zweiten Knotenpunkt 1040. Der invertierende Eingang des Operationsverstärkers 1061 ist über einen Widerstand 1064 mit seinem Ausgang verbunden und über einen weiteren Widerstand 1065 mit dem Ausgang der Tiefpass-Schaltung 1050. Schließlich ist der Ausgang des Operationsverstärkers 1061 über einen Widerstand 1070 mit dem ersten Knotenpunkt 1020 verbunden.

Die in diesem Beispiel verwendeten Bauteil-Werte betragen:

Filter-Kondensator 1010: 1 μF
Widerstände 1062... 1065: 100 kOhm
Widerstand 1070: 5 Ohm
Kondensatoren 1130, 1230: 121 pF und 715 pF
Eingangswiderstände 1140, 1240: 12,1 kOhm und 4,75 kOhm
Kondensatoren 1150, 1250: 100 pF
Widerstände 1160, 1260: 17,4 kOhm und 7,5 kOhm

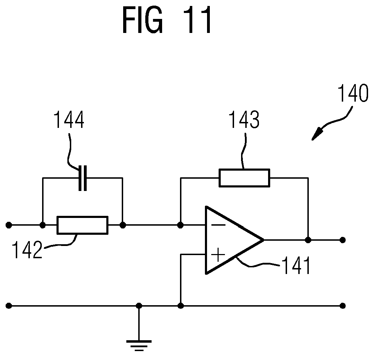

Figur 11 zeigt eine beispielhafte Ausgestaltung für den Einkoppelverstärker 140. Wie bereits im Zusammenhang mit Figur 4 beschrieben, umfasst der Einkoppelverstärker 140 den Operationsverstärker 141 sowie den Eingangswiderstand 142 und den Rückkoppel-Widerstand 143. In der vorteilhaften Ausgestaltung nach Figur 11 ist dem Eingangswiderstand 142 ein Eingangs-Kondensator 144 parallelgeschaltet.

In einer anderen Ausgestaltung kann der Einkoppelverstärker 140 auch als nicht-invertierende Verstärkerschaltung ausgeführt werden. Wie grundsätzlich bekannt, ist in diesem Fall der Eingangswiderstand 142 zwischen den invertierenden Eingang des Operationsverstärkers 141 und Erde geschaltet. Auch hier ist der Eingangs-Kondensator 144 dem Eingangswiderstand 142 parallelgeschaltet, also zwischen den invertierenden Eingang des Operationsverstärkers 141 und Erde geschaltet.

Die Kapzität des Eingangs-Kondensators 144 ist derart gewählt, dass die Eckfrequenz $f = 1/(2\pi RC)$ eines Eingangsfilters bestehend aus Eingangswiderstand 142 und Eingangs-Kondensator 144 im Wesentlichen der Eckfrequenz des Operationsverstärkers entspricht. Liegt diese in einem Beispiel bei 294MHz, dann sind bei einem Wert für den dritten Widerstand von 1,2 kOhm lediglich 4,5 pF für den Eingangs-Kondensator 144 notwendig für die bestmögliche Kompensation.

Bezugszeichen

| | |
|---|---|
| 11... 14 | Verlauf der Übertragungsfunktion G |
| 21...24 | Verlauf der Übertragungsfunktion 1 - G |
| 31...34 | Verlauf der Impedanz verschiedener Induktivitäten |
| $Z_x$ | Impedanz |
| $R_1$ | Dämpfungswiderstand |
| $V_{in}$ | Eingangsspannung |
| $V_{out}$ | Ausgangsspannung |
| $G_x$ | Übertragungsfunktion der Ansteuerschaltung |
| 100 | aktives Filter |
| 110 | Strommessvorrichtung |
| 115 | Verstärkerschaltung |
| 120, 700, 1000 | Hochpassfiltereinheit |

| 121 | Hochpassfilter-Kondensator |
|---|---|
| 122 | Dämpfungs-Widerstand |
| 123 | Spule |
| 125 | Spannungsfolger |
| 130 | Integratorschaltung |
| 131 | Operationsverstärker |
| 132 | Eingangswiderstand |
| 133 | Rückkoppelschaltung |
| 134 | Rückkoppel-Kondensator |
| 135 | Kompensations-Spule |
| 136 | Rückkoppel-Spule |
| 137 | Rückkoppel-Widerstand |
| 140 | Einkoppelverstärker |
| 141 | Operationsverstärker |
| 142 | Eingangswiderstand |
| 143 | Rückkoppel-Widerstand |
| 200 | AC/AC-Umrichter |
| 205 | Übertragungsleitungen |
| 210 | dreiphasiges Versorgungsnetz |
| 220 | passives Filter |
| 222 | gekoppelte Filterspulen zur Filterung von Gleichtakt-Störungen |
| 224 | gekoppelte Filterspulen zur Filterung von Gegentakt-Störungen |
| 226 | Filter-Kondensator |
| 228 | Filter-Kondensator |
| 230 | Gleichrichter |
| 240 | Zwischenkreis-Kondensator |
| 250 | Wechselrichter-Schaltung |
| 260 | Elektromotor |
| 270 | Aktives Filter |
| 300 | Stromversorgung |
| 310 | Gleichspannungslast |
| 320 | einphasiges Versorgungsnetz |
| L | Außenleiter |
| N | Neutralleiter |
| 330 | Gleichrichtereinheit |
| 340 | Zwischenkreis |
| 345 | Zwischenkreis-Kondensator |
| 350 | Schaltwandler |
| 360 | passives Filter |
| 361,362 | Zweig |
| 363 | Kondensator |
| 364 | gekoppelte Filter-Spulen |
| 370 | aktives Filter |
| 710 | Operationsverstärker |
| $R_D$ | Dämpfungswiderstand |
| $C_{Gy}$ | Hilfskondensator |
| $R_{Gy}$ | Hilfswiderstand |
| 1010 | Filter-Kondensator |
| 1020 | erster Knotenpunkt |
| 1030 | Spannungsfolger |
| 1040 | zweiter Knotenpunkt |
| 1050 | Tiefpass-Schaltung |
| 1060 | Subtrahier-Schaltung |
| 1061 | Operationsverstärker |
| 1062... 1065 | Widerstände |
| 1070 | Widerstand |
| 1100, 1200 | Sallen-Key-Filterstrukturen |
| 1110, 1210 | Operationsverstärker |

| 1130, 1230 | Kondensator |
| 1140, 1240 | Eingangswiderstand |
| 1150, 1250 | Kondensator |
| 1160, 1260 | Widerstand |

**Patentansprüche**

1. Aktives Störfilter (100, 270, 370) in Feedforward-Topologie zur aktiven EMV-Filterung von Störsignalen, die von einer EMV-Quelle in einer elektronischen Schaltung (200, 300) in eine Übertragungsleitung (205, L, N) eingekoppelt werden, umfassend

   - eine Messvorrichtung (110) zur Detektion der Störungen,
   - einer Hochpassfiltereinheit (120, 700, 1000),
   - eine Stromeinprägeeinheit,

   wobei

   - die Stromeinprägeeinheit eine Spannungsquelle umfasst,
   - die Spannungsquelle eine Integratorschaltung (130) umfasst,
   - die Integratorschaltung (130) einen Operationsverstärker (131) und eine Rückkoppelschaltung (133) umfasst,
   - die Rückkoppelschaltung (133) eine Parallelschaltung eines ersten und zweiten Zweigs umfasst, wobei der erste Zweig eine Serienschaltung eines Rückkoppel-Kondensators (134) und einer Kompensations-Induktivität (135) umfasst.

2. Aktives Störfilter (100, 270, 370) nach Anspruch 1, bei dem die Kompensations-Induktivität (135) eine Induktivität von nicht mehr als 150 nH aufweist.

3. Aktives Störfilter (100, 270, 370) nach Anspruch 1, bei dem der zweite Zweig einen Rückkoppel-Widerstand (137) oder eine Rückkoppel-Induktivität (136) umfasst.

4. Aktives Störfilter (100, 270, 370) nach Anspruch 1 mit einem gedämpften zweipoligen Filter als Hochpassfiltereinheit (120, 700, 1000).

5. Aktives Störfilter (100, 270, 370) nach Anspruch 1, bei dem das gedämpfte zweipolige Filter einen Filterkondensator und eine Filter-Serienschaltung einer Filterinduktivität zu einem Dämpfungswiderstand umfasst, wobei die Anschlüsse des Filterkondensators als Signal-Anschlüsse der Hochpassfiltereinheit (120, 700, 1000) dienen.

6. Aktives Störfilter (100, 270, 370) nach Anspruch 1, bei dem die Filterinduktivität durch eine Gyratorschaltung gebildet ist.

7. Aktives Störfilter (100, 270, 370) nach Anspruch 6, bei dem die Filter-Serienschaltung einen Operationsverstärker (710) umfasst, wobei

   - dessen Ausgang mit seinem invertierenden Eingang gekoppelt ist,
   - zwischen dem invertierenden und nicht-invertierenden Eingang eine Serienschaltung aus dem Dämpfungswiderstand ($R_D$) und einem Gyratorkondensator ($C_{Gy}$) geschaltet ist,
   - der Knotenpunkt zwischen dem Dämpfungswiderstand ($R_D$) und dem Gyratorkondensator ($C_{Gy}$) einen ersten Anschluss der Filter-Serienschaltung bildet,
   - ein Gyratorwiderstand ($R_{Gy}$) zwischen den nichtinvertierenden Eingang und einen zweiten Anschluss der Filter-Serienschaltung geschaltet ist.

8. Aktives Störfilter (100, 270, 370) nach einem der Ansprüche 1 bis 3, bei dem die Hochpassfiltereinheit (120, 700, 1000) einen Filterkondensator (1010), einen Filterwiderstand, einen Tiefpassfilter (1050) und eine Subtrahierschaltung (1060) aufweist.

9. Aktives Störfilter (100, 270, 370) nach Anspruch 8, bei dem die Subtrahierschaltung (1060) einen Operationsverstärker (1061) umfasst, wobei

- der Ausgang des Operationsverstärkers (1061) mit dem Filterwiderstand verbunden ist,
- der Tiefpassfilter (1050) zwischen einen ersten Eingang des Operationsverstärkers (1061) und den Filterkondensator (1010) geschaltet ist,
- der zweite Eingang des Operationsverstärkers (1061) mit dem Filterkondensator (1010) verbunden ist.

10. Aktives Störfilter (100, 270, 370) nach Anspruch 8 oder 9, bei dem das Tiefpassfilter (1050) eine Serie zweier Sallen-Key-Filter (1100, 1200) aufweist.

11. Aktives Störfilter (100, 270, 370) nach einem der Ansprüche 8 bis 10 mit einem Impedanzwandler (1030) zwischen dem Filterkondensator (1010) und den daran angeschlossenen Knotenpunkten des Tiefpassfilters (1050) und der Subtrahierschaltung (1060).

12. Aktives Störfilter (100, 270, 370) nach einem der vorangehenden Ansprüche mit einer der Integratorschaltung (130) nachgeordneten Verstärkerschaltung (140) mit einem Operationsverstärker (141) und einem mit einem der Eingänge des Operationsverstärkers verbundenen dritten Widerstand (142), wobei dem dritten Widerstand (142) ein dritter Kondensator (143) parallelgeschaltet ist.

13. Aktives Störfilter (100, 270, 370) nach Anspruch 12, bei dem der dritte Kondensator (143) derart gewählt ist, dass die Eckfrequenz eines Eingangsfilters bestehend aus drittem Widerstand (142) und drittem Kondensator (143) im Wesentlichen der Eckfrequenz des Operationsverstärkers (141) entspricht.

14. Einphasiger Stromrichter (300), insbesondere Schaltnetzteil, zur Versorgung einer Last aus einem Versorgungsnetzwerk (320), umfassend ein aktives Störfilter (100, 270, 370) nach einem der vorangehenden Ansprüche.

15. Mehrphasiger Stromrichter (200), insbesondere dreiphasiger AC/AC-Umrichter (200), zur Versorgung einer Last (260) aus einem Versorgungsnetzwerk (210), umfassend ein aktives Störfilter (100, 270, 370) nach einem der Ansprüche 1 bis 13.

FIG 1

FIG 2

FIG 3

# FIG 4

EP 4 641 900 A1

FIG 5

# FIG 6

EP 4 641 900 A1

FIG 7

FIG 8

FIG 9

FIG 10

# FIG 11

Europäisches
Patentamt

European
Patent Office

Office européen
des brevets

**EUROPÄISCHER RECHERCHENBERICHT**

Nummer der Anmeldung

EP 24 17 1594

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 787 619 A1 (HAMILTON SUNDSTRAND CORP [US]) 8. Oktober 2014 (2014-10-08) * Abbildungen 3, 4A, 4B, 5A, 5B, 6A-6D * * Absätze [0010], [0011], [0020], [0025] * | 1-15 | INV. H02M1/12 |
| | ----- | | |
| A | Chaniotakis ET AL: "Operational Amplifier Circuits", , 1. Januar 2006 (2006-01-01), Seiten 1-26, XP055437295, Gefunden im Internet: URL:https://ocw.mit.edu/courses/electrical-engineering-and-computer-science/6-071j-introduction-to-electronics-signals-and-measurement-spring-2006/lecture-notes/23_op_amps2.pdf [gefunden am 2017-12-21] * Seite 16 - Seite 18 * * Abbildung 14 * | 1-15 | |
| | ----- | | RECHERCHIERTE SACHGEBIETE (IPC) |
| A | HAENSEL STEFAN ET AL: "Influence of Voltage Dependency of Capacitors on a 3-Phase Common Mode Feedforward Current Sense Current Injection Active EMI Filter", 2024 IEEE APPLIED POWER ELECTRONICS CONFERENCE AND EXPOSITION (APEC), IEEE, 25. Februar 2024 (2024-02-25), Seiten 1423-1427, XP034597746, DOI: 10.1109/APEC48139.2024.10509062 [gefunden am 2024-05-03] * Abbildungen 1,2 * | 1-15 | H02M |
| | ----- | | |
| A | EP 2 421 129 B1 (ROCKWELL AUTOMATION TECH INC [US]) 18. März 2020 (2020-03-18) * Abbildungen 1-6 * * Absätze [0028], [0037], [0038] * | 1-15 | |
| | ----- | | |
| | -/-- | | |

Der vorliegende Recherchenbericht wurde für alle Patentansprüche erstellt

| Recherchenort | Abschlußdatum der Recherche | Prüfer |
|---|---|---|
| Den Haag | 2. Oktober 2024 | Kail, Maximilian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..............................................................................
& : Mitglied der gleichen Patentfamilie, übereinstimmendes Dokument

EPO FORM 1503 03.82 (P04C03)

Europäisches
Patentamt

European
Patent Office

Office européen
des brevets

# EUROPÄISCHER RECHERCHENBERICHT

**Nummer der Anmeldung**

EP 24 17 1594

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 100 12 519 A1 (SENNHEISER ELECTRONIC [DE]) 4. Oktober 2001 (2001-10-04)<br>* Abbildungen 1-3 *<br>* Absatz [0007] *<br>- - - - - | 6,7 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| Den Haag | 2. Oktober 2024 | Kail, Maximilian |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
.........................................................................
& : Mitglied der gleichen Patentfamilie, übereinstimmendes
Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 17 1594

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-10-2024

| Im Recherchenbericht angeführtes Patentdokument | | Datum der Veröffentlichung | Mitglied(er) der Patentfamilie | | Datum der Veröffentlichung |
|---|---|---|---|---|---|
| EP 2787619 | A1 | 08-10-2014 | EP | 2787619 A1 | 08-10-2014 |
| | | | US | 8823448 B1 | 02-09-2014 |
| EP 2421129 | B1 | 18-03-2020 | CN | 202221964 U | 16-05-2012 |
| | | | EP | 2421129 A2 | 22-02-2012 |
| | | | US | 2011292695 A1 | 01-12-2011 |
| DE 10012519 | A1 | 04-10-2001 | KEINE | | |

EPO FORM P0461

Für nähere Einzelheiten zu diesem Anhang : siehe Amtsblatt des Europäischen Patentamts, Nr.12/82